# EUROPEAN PATENT SPECIFICATION

(11) **EP 2 579 384 B1**
(45) Date of publication and mention of the grant of the patent: **04.12.2019**
(21) Application number: 12185895.5
(22) Date of filing: 25.09.2012
(51) Int. Cl.: H01M 2/34, H01M 10/65, H01M 10/637

(54) **Rechargeable battery**
Wiederaufladbare Batterie
Batterie rechargeable

(30) Priority: 07.10.2011 US 201161544809 P; 14.09.2012 US 201213617526
(43) Date of publication of application: 10.04.2013
(73) Proprietor: Samsung SDI Co., Ltd., Yongin-si, Gyeonggi-do (KR)
(72) Inventor: Hong, Sung-Ho, Yongin-si (Gyeonggi-do) (KR)
(74) Representative: Santarelli

(56) References cited:
- US-A1- 2002 150 815
- US-A1- 2004 257 036
- US-A1- 2006 099 503
- US-A1- 2011 123 838

## Description

The present invention relates to a rechargeable battery that attaches a temperature protection element, *e.g.* having a positive temperature coefficient, to a pouch.

With the development of a mobile device, a demand for a rechargeable battery is increased as an energy source. In addition, the high-energy, down-sized, light, and slim mobile device has been required. For example, a rechargeable battery is flatly formed using a polymer film. As the rechargeable battery, there is a pouch type rechargeable battery effectively implementing the slimness of the battery.

In the pouch type rechargeable battery, an electrode assembly is formed by stacking a positive electrode and a negative electrode on both surfaces, putting the polymer film passing through lithium ion therebetween. The lithium ion polymer rechargeable battery installs the electrode assembly in the pouch by disposing the exterior material on both surfaces of the electrode assembly and thermally fusing peripheral portions of the exterior material.

A positive electrode lead tab connected to the positive electrode of the electrode assembly and a negative electrode lead tab connected to the negative electrode are drawn out to one side of the pouch. The positive electrode lead tab and the negative electrode lead tab are electrically connected to a protective circuit module (PCM) that installs protection circuit parts.

The protective circuit module prevents overcharge, over-discharge, overcurrent, and short circuit in the rechargeable battery. In addition, a temperature protection element, for instance of the type having a positive temperature coefficient, is used between the protective circuit module and the positive electrode lead tab.

When the temperature of the rechargeable battery reaches the predetermined risk value, the temperature protection element, i.e., Thermal-Cut-Off (TCO) electrically isolates the positive terminal from the protective circuit module and when the temperature of the rechargeable battery cools down below the setup safety value, the temperature protection element again connects the positive terminal to the protective circuit module. Therefore, a need exists for the temperature protection element having the excellent temperature detecting performance for the rechargeable battery.

Document US 2004/0257036 teaches a secondary battery including a safety device having a positive temperature coefficient element.

Document US 2002/0150815 teaches a battery pack comprising a heat-sensitive current blocking element mounted on the outer surface of the batter main body.

US2006099503 discloses a rechargeable battery comprising a lead tab protruding from the enclosure, wherein a temperature protection element is affixed to an external surface of the enclosure and a connection tab is connected to said lead tab via the temperature protection element, said lead tab being electrically insulated from the enclosure.

The above information is only for enhancement of understanding of the background of the invention and therefore it may contain information that does not form the prior art that is already known in this country to a person of ordinary skill in the art.

One aspect of the present invention has been made in an effort to provide a pouch type rechargeable battery having improved operation quality by preventing malfunction of a temperature protection element.

The invention provides a rechargeable battery according to claim 1, and a process of assembling a rechargeable battery according to claim 12.

The temperature protection element is thus correctly influenced by the temperature of the enclosure (e.g. a pouch).

The temperature protection element is for instance affixed to said external surface by a double-sided adhesive tape. This arrangement is particularly practical, in particular in view of the process proposed below.

The external portion of the electrode lead tab and the temperature protection element may be connected through a first connection portion. Part of the first connection portion at least may be in mechanical contact with the enclosure. The sensitivity of the temperature protection element to the temperature of the enclosure is thereby further improved.

It may also be provided in practice that another lead tab (e.g. a negative electrode lead tab) is electrically connected to the second electrode and comprises an external portion protruding from the enclosure in a direction substantially parallel to said connection tab.

The connection tab and the other lead tab may then be connected to a protective circuit module.

An insulation tape may cover the temperature protection element such that the temperature protection element is sandwiched between the insulation tape and the enclosure. This also improves the sensitivity of the temperature protection element to the temperature of the enclosure.

As already noted, the enclosure may be a pouch.

The enclosure may comprise a first portion and a second portion thermally adhered together. The enclosure includes for instance a multi-layer sheet. The electrode lead tab may sealingly cross the enclosure.

The temperature protection element is for instance a positive temperature coefficient resistor, as described below.

The invention also provides a process for assembling a rechargeable battery as presented above, comprising the following steps:
- affixing the connection tab to the temperature protection element;
- mounting the temperature protection element on the external portion of the electrode lead tab;
- bending the external portion of the electrode lead tab;
- once the external portion is bent, affixing the temperature protection element to the external surface of the enclosure.

As explained in the detailed description of an embodiment given below, the electrode lead tab is for instance made of a bendable (i.e. flexible) metal such as aluminum.

According to a particular embodiment, a double-sided adhesive tape may be deposited on the temperature protection element before bending the external portion and the temperature protection element may then be affixed to the external surface of the enclosure by the double-sided adhesive tape.

The temperature protection element includes for instance a first connection portion attached to an extension portion wound around the external portion of the electrode lead tab and a second connection portion attached to the connection tab.

Said differently, a rechargeable battery according to an exemplary embodiment of the present invention includes a pouch installing an electrode assembly, first and second lead tabs connected to the electrode assembly and drawn out to one side of the pouch, a temperature protection element connected to the first tab, and a connection tab connected to the temperature protection element. The temperature protection element is attached to the pouch using a double-sided adhesive tape and covered by an insulation tape.

As described, according to the exemplary embodiment of the present invention, the temperature protection element is attached to the pouch and then covered by the insulation tape, and therefore the temperature protection element is activated by heat transmitted from the pouch and the temperature protection element can be firmly fixed.

Further, according to the exemplary embodiment of the present invention, a portion connected to the temperature protection element of the first lead tab directly contacts the pouch and then the heat is radiated, and thus, when a temperature of the temperature protection element is sensed, the temperature protection element is not influenced by the heat directly transmitted to the first lead tab. That is, the operation quality of the temperature protection element can be improved.

Other features and advantages of the description will appear in light of the following description, presented in view of the appended drawings, where:
FIG. 1 is a perspective view of a pouch type rechargeable battery according to an exemplary embodiment of the present invention.
FIG. 2 is an exploded perspective view of an electrode assembly and a pouch of the pouch type rechargeable battery according to the exemplary embodiment of the present invention.
FIG. 3 is an exploded perspective view of the electrode assembly of the pouch type rechargeable battery according to the exemplary embodiment of the present invention.
FIG. 4 is an exploded perspective view of a positive electrode lead tab and a temperature protection element of the pouch type rechargeable battery according to the exemplary embodiment of the present invention.
FIG. 5 is a perspective view showing a folding state of assembly of a positive electrode lead tab and a temperature protection element of the pouch type rechargeable battery shown in FIG. 4.
FIG. 6 is a perspective view showing a folded state of assembly of a positive electrode lead tab and a temperature protection element of the pouch type rechargeable battery shown in FIG. 4.
FIG. 7 is a cross-sectional view showing inside of a temperature protection element.
FIG. 8 is a cross-sectional view of FIG. 1, taken along the line VIII-VIII.

The present invention will be described more fully hereinafter with reference to the accompanying drawings, in which exemplary embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

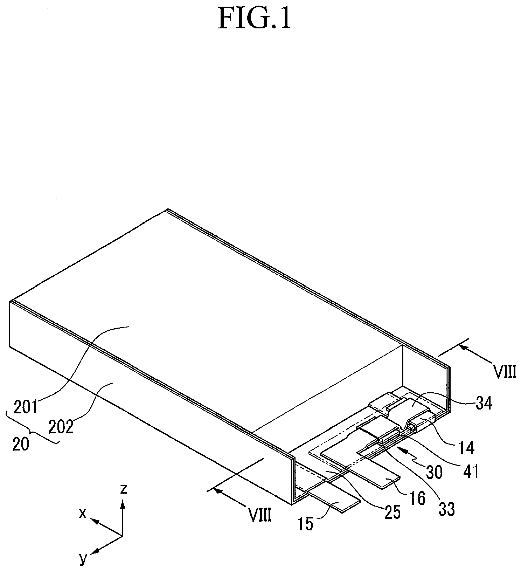

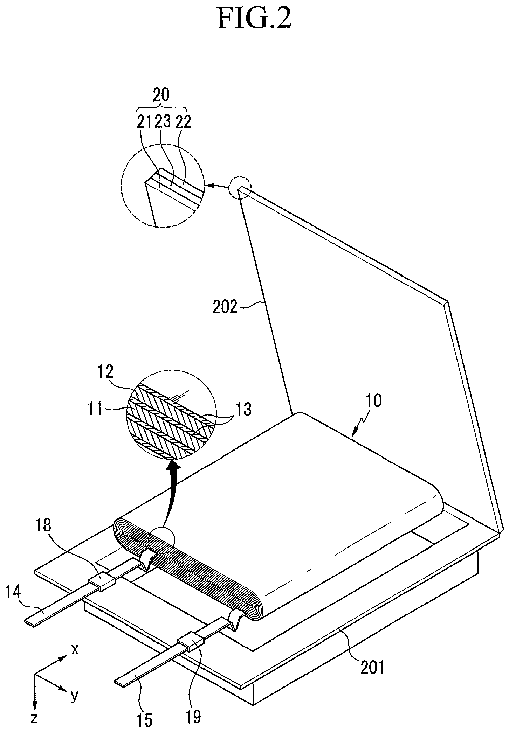

FIG. 1 is a perspective view of a pouch type rechargeable battery according to an exemplary embodiment of the present invention and FIG. 2 is an exploded perspective view of an electrode assembly 10 and a pouch 20 of the pouch type rechargeable battery according to the exemplary embodiment of the present invention. Referring to FIG. 1 and FIG. 2, the rechargeable battery according to the exemplary embodiment includes the electrode assembly 10 and the pouch 20 enclosing the electrode assembly 10.

The electrode assembly 10 is formed in the shape of a jelly roll by winding a first electrode (for convenience, referred to as a positive electrode) 11 and a second electrode (for convenience, referred to as a negative electrode) 12, interposing a separator 13 therebetween. The separator 13 may be formed of a polymer film that transmits lithium ion.

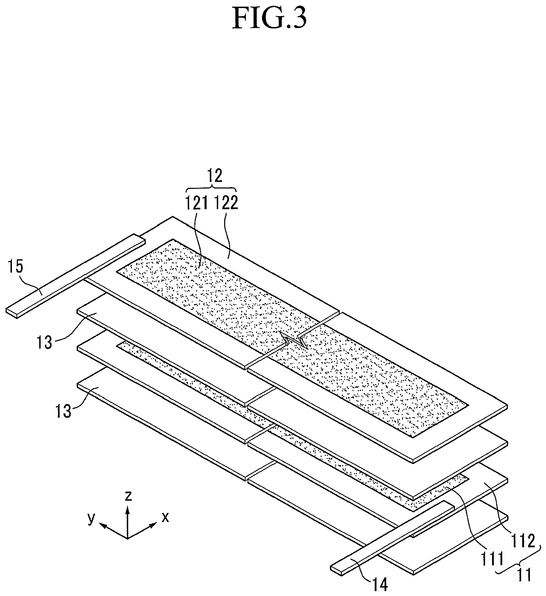

FIG. 3 is an exploded perspective view of the pouch type electrode assembly 10 of the rechargeable battery according to the exemplary embodiment of the present invention. Referring to FIG. 3, the positive electrode 11 includes a coated region 111 where an active material is coated on a thin film current collector and an uncoated region 112 where a current collector is exposed because of not being coated with the active material. A first lead tab (for convenience, referred to as a positive electrode lead tab) 14 is connected to the uncoated region 112 of the positive electrode 11.

The negative electrode 12 includes a coated region 121 where an active material (that is different from the active material coated on the positive electrode 11) is coated on a thin film current collector and an uncoated region 122 where a current collector is exposed because of not being coated with the active material. The second lead tab (for convenience, referred to as a negative electrode lead tab) 15 is connected to the uncoated region 122 of the negative electrode 11 from the opposite side of the first lead tab 14.

The positive electrode lead tab 14 and the negative electrode lead tab 15 are respectively drawn out toward the same side (zy plane of FIG. 3) of the electrode assembly 10. Further, the positive electrode lead tab 14 and the negative electrode lead tab 15 may be respectively disposed at the opposite side (lateral sides in x-axis direction of FIG. 1) of the electrode assembly (not shown).

Referring back to FIG. 2, the pouch 20 may have a multi-layered sheet that surrounds the exterior of the electrode assembly 10. For example, the pouch 20 includes a polymer sheet 21 forming the interior and providing insulation and thermal adhesion functions, a polyethyleneterephthalate (PET) sheet, a nylon sheet, or a PET-nylon compound sheet 22 (hereinafter, referred to as a nylon sheet for convenience of description), and a metal sheet 23 providing mechanical strength. The metal sheet 23 is disposed between the polymer sheet 21 and the nylon sheet 22, and may be exemplarily formed of an aluminum sheet.

In addition, referring to FIG. 1 and FIG. 2, the pouch 20 includes a first exterior portion 201 receiving the electrode assembly 10 and a second exterior portion 202 thermally adhered to the first exterior material 201 from the outside of the electrode assembly 10 while covering the electrode assembly 10. The first and second exterior portions 201 and 202 may be the same as the polymer sheet 21, the nylon sheet 22, and the metal sheet 23 in structure.

For example, the first exterior portion 201 has a concave structure for receiving the electrode assembly 10 and the second exterior portion 202 is formed flat to cover the electrode assembly 10 received in the first exterior portion 201.

Further, the electrode assembly 10 has a cuboid flat structure, and accordingly, the pouch 20 is formed in the shape of a cuboid flat structure. The rechargeable battery is formed by surrounding the electrode assembly 10 with the pouch 20, and therefore the rechargeable battery is entirely formed in the shape of the cuboid flat structure.

The positive electrode lead tab 14 and the negative electrode lead tab 15 are connected to the outside of the thermally adhered pouch 20 so that the electrode assembly 10 is electrically drawn out to the outside of the pouch 20. That is, the positive electrode lead tab 14 and the negative electrode lead tab 15 are disposed penetrating the thermally adhered first and second exterior portions 201 and 202 in a terrace portion 25 formed in one side (here a side parallel to the yz plane of FIG. 1) of the pouch 20. In this case, the positive electrode lead tab 14 and the negative electrode lead tab 15 are electrically insulated from the pouch 20 by insulating members 18 and 19.

The terrace portion 25 is formed by thermally adhering the first exterior portion 201 bent along the electrode assembly 10 at the drawn-out side of the positive electrode lead tab 14 and the negative electrode lead tab 15 to a flat bottom side of the second exterior portion 202.

The rechargeable battery includes a protective circuit module (not shown) formed by installing protection circuit elements in a circuit board for protection from overcharge, over-discharge, overcurrent, and external short circuit. The protective circuit module may be disposed in the terrace portion.

The negative electrode lead tab 15 is directly connected to the protective circuit module, and the positive electrode lead tab 14 is connected to the protective circuit module through a temperature protection element 30. The temperature protection element 30 has a positive temperature coefficient and its resistance is infinitely increased at a predetermined temperature.

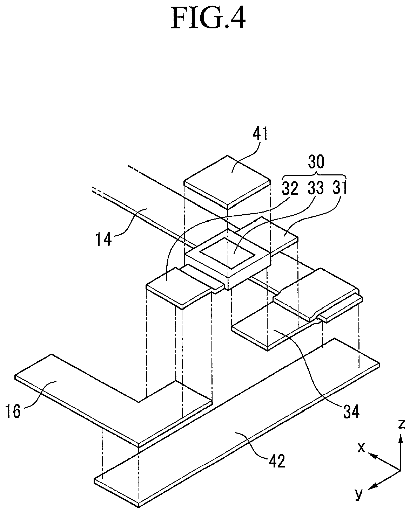

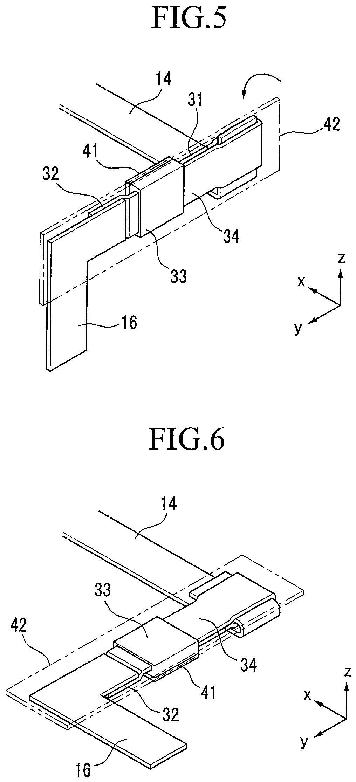

FIG. 4 is an exploded perspective view of the positive electrode lead tab 14 and the temperature protection element 30 of the pouch type rechargeable battery of the exemplary embodiment of the present invention. FIG. 5 is a perspective view showing a folding state of assembly of the positive electrode lead tab 14 and the temperature protection element 30 of the pouch type rechargeable battery shown in FIG. 4; FIG. 6 is a perspective view showing a folded state of assembly of the positive electrode lead tab 14 and a temperature protection element 30 of the pouch type rechargeable battery shown in FIG. 4. Referring to FIG. 1, FIG. 4 through FIG. 6, the positive electrode lead tab 14 extends out to the outside of the pouch 20 and is then mechanically and electrically connected to the temperature protection element 30 as further explained below.

The temperature protection element 30 includes a first connection portion 31 connected to the positive electrode lead tab 14, a transmission portion 33 connected to the first connection portion 31, and a second connection portion 32 connected to the transmission portion 33.

An extension portion 34 winds around an end of the positive electrode lead tab 14 and is then coupled to the first connection portion 31 by welding. The second connection portion 32 and a connection tab 16 are coupled with each other by welding. The transmission portion 33 transmits heat to the inside of the temperature protection element 30 having the positive temperature coefficient. The temperature protection element 30 blocks a current between the positive lead tab 14 and the connection tab 16 when a temperature of the rechargeable battery reaches a predetermined level due to the heat transmission of the transmission portion 33.

The positive electrode lead tab 14 is connected to the temperature protection element 30 through the extension portion 34, the temperature protection element 30 is connected to the connection tab 16; the positive electrode lead tab 14 is bent such that the first connection portion 31 of the temperature protection element 30 can be further connected to the positive electrode lead tab 14. Thus, the positive electrode lead tab 14 and the first connection portion 31 form a connection surface as the multi-layer structure.

In the present case, the transmission portion 33 of the temperature protection element 30 is attached to the terrace portion 25 of the pouch 20 by providing therebetween a double-sided adhesive tape 41, and the connection tab 16 protrudes to the outside of the terrace portion 25 in a location that is further close to the negative electrode lead tab 15 from the positive electrode lead tab 14 along the y-axis direction.

Thus, the heat generated from the electrode assembly 10 and then transmitted from the pouch 20 is transmitted through the transmission portion 33 attached to the terrace portion 25 and then sensed by the temperature protection element 30. Thus, the temperature protection element 30 can detect an accurate temperature of the rechargeable battery, generated from the electrode assembly 10.

For convenience, FIG. 1 illustrates that the transmission portion 33 is attached to the terrace portion 25 by the double-sided adhesive tape 41. Thus, the connection structure of the second connection portion 32 and the connection tab 16 can be stably maintained.

As described, in the outside of the pouch 20, the temperature protection element 30 is connected to the positive electrode lead tab 14 and the connection tab 16 is connected to the temperature protection element 30. In addition, the connection tab 16 is electrically connected to the protective circuit module (not shown) together with the negative electrode lead tab 15.

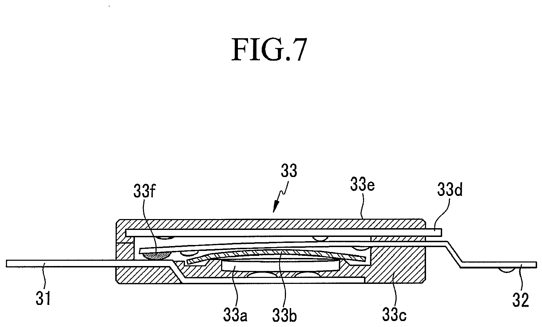

FIG. 7 is a cross-sectional view showing inside of the temperature protection element.

As shown in FIG. 7, the temperature protection element is formed by coupling a base 33c and a cover 33e, and includes the first connection portion 31, transmission portion 33 and the second connection portion 32. Positive temperature coefficient element (PTC element) 33a contacts with the first connection portion 31 within the transmission portion 33, and a bimetal disc 33b contacts with upper side of the PTC element 33a within the transmission portion 33. The second connection portion 32 contacts with the first connection portion 31 at a contact point 33f, and the second connection portion 32 also contacts with the bimetal disc 33b. The first connection portion 31 extends inside of the transmission portion 33 and partly exposed toward bottom side.

Hence, the first connection portion 31 and the second connection portion 32 contacts with each other and are electrically coupled to each other. When heat is transferred to the portion of the first connection portion 31 exposed through the bottom of the transmission portion 33, the PTC element 33a is heated to reverse the bimetal disk 33b. The reversed bimetal disk 33b pushes the second connection portion 32 toward upper side of the transmission portion 33 (precisely into an abutment portion 33d) such that the first connection portion 31 and the second connection portion 32 separates from each other resulting in electrical cut off.

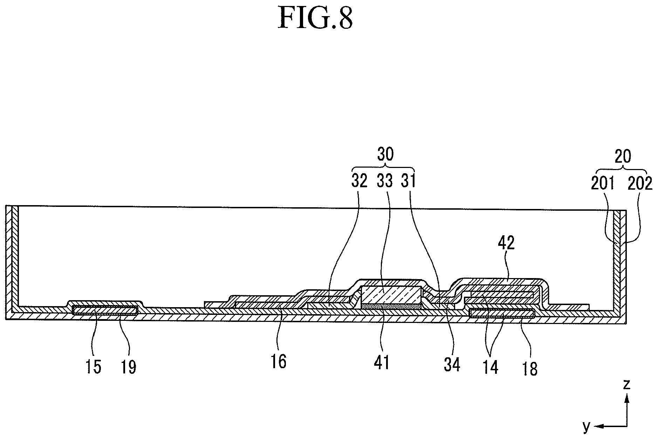

FIG. 8 is a cross-sectional view of FIG. 1, taken along the line VIII-VIII. Referring to FIG. 8, the first connection portion 31 of the temperature protection element 30 directly contacts the pouch 20 and thus directly discharges heat of the positive electrode lead tab 14 to the pouch 20. In further detail, a portion of the first connection portion 31, disposed between the transmission portion 33 and the positive electrode lead tab 14 directly contacts the pouch 20.

In this case, since the first connection portion 31 is directly attached to the pouch 20 without an insulation tape, the first connection portion 31 has excellent heat dissipation performance. The first connection portion 31 may be electrically insulated by the nylon sheet 22 in the external side of the pouch 20. In addition, if the external side of the pouch 20 is formed of a conductive material and thus an electric connection structure is formed between the first connection portion 31 and the pouch 20, the pouch 20 may have positive polarity (not shown).

Thus, the transmission portion 33 is not influenced by heat transmitted from the positive electrode lead tab 14 connected to the first connection portion 31, and detects a temperature depending on the heat directly transmitted from the pouch 20. The temperature protection element 30 may be activated by detecting the temperature of the rechargeable battery using the heat transmitted to the transmission portion 33. Thus, a current can be promptly blocked between the positive electrode lead tab 14 and the connection tab 16 by the activation of the temperature protection element 30.

Meanwhile, an insulation tape 42 wholly covers the temperature protection element 30, that is, covers the first and second connection portions 31 and 32 connected to the transmission portion 33, covers a connection portion of the first connection portion 31, the extension portion 34 and the positive electrode lead tab 14, and is attached to the terrace portion 25 by covering a connection portion of the connection tab 16 and the second connection portion 32.

That is, a metal portion having conductivity in the temperature protection element 30 is covered by the insulation tape 42, and therefore possibility of short-circuit of the temperature protection element 30 can be eliminated and the temperature protection element 30 can be firmly fixed to the terrace portion 25.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

**<Description of symbols>**

| | | |
|---|---|---|
| 10: electrode assembly | 11: first electrode (positive electrode) | |
| 12: second electrode (negative electrode) | 13: separator | |
| 14: first lead tab (positive electrode lead tab) | | |
| 15: second lead tab (negative electrode lead tab) | | |
| 16: connection tab | 18, 19: insulating member | |
| 20: pouch | 21: polymer sheet | |
| 22: compound sheet (nylon sheet) | 23: metal sheet | |
| 25: terrace portion | | |
| 30: temperature protection element | | |
| 31, 32: first and second connection portions | | |
| 33: transmission portion | 33a: PTC element | 33b: bimetal disc |
| 33c: base | 33d: abutment portion | |
| 33e: cover | 33f: contact point | |
| 34: extension portion | 41: double-sided adhesive tape | |
| 42: insulation tape | | |
| 111, 121: coated region | | |
| 112, 122: uncoated region | | |
| 201, 202: first and second exterior portions | | |

## Claims

1. Rechargeable battery comprising an enclosure (20) containing an electrode assembly (10), the electrode assembly (10) comprising a first electrode (11) and a second electrode (12), wherein an electrode lead tab (14) is electrically connected to the first electrode (11) and includes an external portion protruding from the enclosure (20),
a temperature protection element (30) for cutting current flow through the temperature protection element (30) depending on temperature is affixed to an external surface of the enclosure (20) and in that a connection tab (16) is connected to said external portion via the temperature protection element (30), said electrode lead tab (14) being electrically insulated from the enclosure (20),
wherein the temperature protection element (30) includes: a first connection portion 31 connected to the positive electrode lead tab (14), a transmission portion (33) connected to the first connection portion (31), and a second connection portion (32) connected to the transmission portion (33), **characterised in that** the external portion of the electrode lead tab (14) and the temperature protection element (30) are connected through an extension portion (34) winding around an end of the electrode lead tab (14) and coupled to the first connection portion (31).

2. Rechargeable battery according to claim 1, wherein the temperature protection element (30) is affixed to said external surface by a double-sided adhesive tape (41).

3. Rechargeable battery according to claim 1 or 2, wherein part of the first connection portion (31) is in mechanical contact with the enclosure (20).

4. Rechargeable battery according to any of claims 1-3, wherein another lead tab (15) is electrically connected to the second electrode (12) and comprises an external portion protruding from the enclosure (20) in a direction substantially parallel to said connection tab (16).

5. Rechargeable battery according to claim 4, wherein the connection tab (16) and the other lead tab (15) are connected to a protective circuit module.

6. Rechargeable battery according to any of claims 1-5, wherein an insulation tape (42) covers the temperature protection element (30) such that the temperature protection element (30) is sandwiched between the insulation tape (42) and the enclosure (20).

7. Rechargeable battery according to any of claims 1-6, wherein the enclosure is a pouch (20).

8. Rechargeable battery according to any of claims 1-7, wherein the enclosure comprises a first portion (201) and a second portion (202) thermally adhered together.

9. Rechargeable battery according to any of claims 1-8, wherein the enclosure (20) includes a multi-layer sheet.

10. Rechargeable battery according to any of claims 1-9, wherein the electrode lead tab (14) sealingly crosses the enclosure (20).

11. Rechargeable battery according to any of claims 1-10, wherein the temperature protection element (30) is a positive temperature coefficient resistor.

12. Process for assembling a rechargeable battery according to claim 1, comprising the following steps:
- affixing the connection tab (16) to the temperature protection element (30);
wherein the temperature protection element (30) includes: a first connection portion 31 connected to the positive electrode lead tab (14), a transmission portion (33) connected to the first connection portion (31), and a second connection portion (32) connected to the transmission portion (33);
- mounting the temperature protection element (30) on the external portion of the electrode lead tab (14);
- bending the external portion of the electrode lead tab (14);
- once the external portion is bent, affixing the temperature protection element (30) to the external surface of the enclosure (20), wherein, the external portion of the electrode lead tab (14) and the temperature protection element (30) are connected through an extension portion (34) winding around an end of the electrode lead tab (14) and coupled to the first connection portion (31).

13. Assembling process according to claim 12, wherein a double-sided adhesive tape (41) is deposited on the temperature protection element before bending the external portion and wherein the temperature protection element (30) is affixed to the external surface of the enclosure (20) by the double-sided adhesive tape (41).

14. Assembling process according to claim 12 or 13, wherein the temperature protection element (30) includes a first connection portion (31) attached to an extension portion (34) wound around the external portion of the electrode lead tab (14) and a second connection portion (32) attached to the connection tab (16).

## Patentansprüche

1. Wiederaufladbare Batterie, umfassend ein Gehäuse (20), das eine Elektrodenanordnung (10) enthält, wobei die Elektrodenanordnung (10) eine erste Elektrode (11) und eine zweite Elektrode (12) umfasst,
wobei eine Elektrodenanschlussleiste (14) elektrisch mit der ersten Elektrode (11) verbunden ist und einen äußeren Abschnitt beinhaltet, der von dem Gehäuse (20) hervorsteht,
ein Temperaturschutzelement (30) zum temperaturabhängigen Unterbrechen des durch das Temperaturschutzelement (30) fließenden Stroms an einer Außenoberfläche des Gehäuses (20) befestigt ist, und ein Verbindungsabschnitt (16) über das Temperaturschutzelement (30) mit dem Außenabschnitt verbunden ist,
wobei die Elektrodenanschlussleiste (14) elektrisch vom Gehäuse (20) isoliert ist,
wobei das Temperaturschutzelement (30) Folgendes beinhaltet: einen ersten Verbindungsabschnitt (31), der mit der positiven Elektrodenanschlussleiste (14) verbunden ist, einen Übertragungsabschnitt (33), der mit dem ersten Verbindungsabschnitt (31) verbunden ist, und einen zweiten Verbindungsabschnitt (32), der mit dem Übertragungsabschnitt (33) verbunden ist,
**dadurch gekennzeichnet, dass**
der Außenabschnitt der Elektrodenanschlussleiste (14) und das Temperaturschutzelement (30) durch einen Verlängerungsabschnitt (34), der um ein Ende der Elektrodenanschlussleiste (14) gewickelt und an den ersten Verbindungsabschnitt (31) gekoppelt ist, verbunden sind.

2. Wiederaufladbare Batterie nach Anspruch 1, wobei das Temperaturschutzelement (30) mit einem doppelseitigen Klebeband (41) an der Außenoberfläche befestigt ist.

3. Wiederaufladbare Batterie nach Anspruch 1 oder 2, wobei ein Teil des ersten Verbindungsabschnitts (31) mit dem Gehäuse (20) in mechanischem Kontakt steht.

4. Wiederaufladbare Batterie nach einem der Ansprüche 1-3, wobei eine andere Anschlussleiste (15) elektrisch mit der zweiten Elektrode (12) verbunden ist und einen Außenabschnitt umfasst, der in einer Richtung, die im Wesentlichen parallel ist zur Anschlussleiste (16), vom Gehäuse (20) vorsteht.

5. Wiederaufladbare Batterie nach Anspruch 4, wobei die Verbindungsleiste (16) und die andere Anschlussleiste (15) mit einem Schutzschaltmodul verbunden sind.

6. Wiederaufladbare Batterie nach einem der Ansprüche 1-5, wobei ein Isolierband (42) das Temperaturschutzelement (30) derart abdeckt, dass das Temperaturschutzelement (30) sandwichartig zwischen dem Isolierband (42) und dem Gehäuse (20) angeordnet ist.

7. Wiederaufladbare Batterie nach einem der Ansprüche 1-6, wobei das Gehäuse ein Beutel (20) ist.

8. Wiederaufladbare Batterie nach einem der Ansprüche 1-7, wobei das Gehäuse einen ersten Abschnitt (201) und einen zweiten Abschnitt (202) umfasst, die thermisch miteinander verklebt sind.

9. Wiederaufladbare Batterie nach einem der Ansprüche 1-8, wobei das Gehäuse (20) eine mehrschichtige Folie beinhaltet.

10. Wiederaufladbare Batterie nach einem der Ansprüche 1-9, wobei die Elektrodenanschlussleiste (14) das Gehäuse (20) auf abdichtende Weise kreuzt.

11. Wiederaufladbare Batterie nach einem der Ansprüche 1-10, wobei das Temperaturschutzelement (30) ein Kaltleiter ist.

12. Vorgang zur Montage einer wiederaufladbaren Batterie nach Anspruch 1, umfassend die folgenden Schritte:
- Befestigen der Anschlussleiste (16) am Temperaturschutzelement (30);
wobei das Temperaturschutzelement (30) Folgendes beinhaltet: einen ersten Verbindungsabschnitt (31), der mit der positiven Elektrodenanschlussleiste (14) verbunden ist, einen Übertragungsabschnitt (33), der mit dem ersten Verbindungsabschnitt (31) verbunden ist, und einen zweiten Verbindungsabschnitt (32), der mit dem Übertragungsabschnitt (33) verbunden ist;
- Aufbringen des Temperaturschutzelements (30) auf dem Außenabschnitt der Elektrodenanschlussleiste (14);
- Biegen des Außenabschnitts der Elektrodenanschlussleiste (14);
- wenn der Außenabschnitt gebogen ist, Befestigen des Temperaturschutzelements (30) auf der Außenoberfläche des Gehäuses (20), wobei der Außenabschnitt der Elektrodenanschlussleiste (14) und das Temperaturschutzelement (30) durch einen Verlängerungsabschnitt (34), der um ein Ende der Elektrodenanschlussleiste (14) gewickelt und an den ersten Verbindungsabschnitt (31) gekoppelt ist, verbunden sind.

13. Montagevorgang nach Anspruch 12, wobei ein doppelseitiges Klebeband (41) auf das Temperaturschutzelement angeordnet wird, bevor der Außenabschnitt wird, und wobei das Temperaturschutzelement (30) durch das doppelseitige Klebeband (41) an die Außenoberfläche des Gehäuses (20) befestigt wird.

14. Montagevorgang nach Anspruch 12 oder 13, wobei das Temperaturschutzelement (30) einen ersten Verbindungsabschnitt (31), der an einem Verlängerungsabschnitt (34), der um den Außenabschnitt der Elektrodenanschlussleiste (14) gewickelt ist, befestigt ist, und einen zweiten Verbindungsabschnitt (32), der an der Verbindungsleiste (16) befestigt ist, beinhaltet.

## Revendications

1. Batterie rechargeable comprenant une enceinte (20) contenant un ensemble d'électrodes (10), l'ensemble d'électrodes (10) comprenant une première électrode (11) et une deuxième électrode (12), dans laquelle une languette de connexion d'électrode (14) est connectée électriquement à la première électrode (11) et comprend une partie externe faisant saillie de l'enceinte (20),
un élément de protection contre la température (30) pour couper la circulation de courant à travers l'élément de protection contre la température (30) en fonction de la température est fixé à une surface externe de l'enceinte (20) et une languette de connexion (16) est connectée à ladite partie externe par l'intermédiaire de l'élément de protection contre la température (30), ladite languette de connexion d'électrode (14) étant isolée électriquement de l'enceinte (20),
dans laquelle l'élément de protection contre la température (30) comprend : une première partie de connexion (31) connectée à la languette de connexion d'électrode positive (14), une partie de transmission (33) connectée à la première partie de connexion (31), et une deuxième partie de connexion (32) connectée à la partie de transmission (33), **caractérisée en ce que**
la partie externe de la languette de connexion d'électrode (14) et l'élément de protection contre la température (30) sont connectés par l'intermédiaire d'une partie d'extension (34) s'enroulant autour d'une extrémité de la languette de connexion d'électrode (14) et couplée à la première partie de connexion (31).

2. Batterie rechargeable selon la revendication 1, dans laquelle l'élément de protection contre la température (30) est fixé à ladite surface externe par une bande adhésive double face (41).

3. Batterie rechargeable selon la revendication 1 ou 2, dans laquelle une partie de la première partie de connexion (31) est en contact mécanique avec l'enceinte (20).

4. Batterie rechargeable selon l'une quelconque des revendications 1 à 3, dans laquelle une autre languette de conducteur (15) est connectée électriquement à la deuxième électrode (12) et comprend une partie externe faisant saillie de l'enceinte (20) dans une direction sensiblement parallèle à ladite languette de connexion (16).

5. Batterie rechargeable selon la revendication 4, dans laquelle la languette de connexion (16) et l'autre languette de conducteur (15) sont connectées à un module de circuit de protection.

6. Batterie rechargeable selon l'une quelconque des revendications 1 à 5, dans laquelle une bande isolante (42) recouvre l'élément de protection contre la température (30) de sorte que l'élément de protection contre la température (30) soit intercalé entre la bande isolante (42) et l'enceinte (20).

7. Batterie rechargeable selon l'une quelconque des revendications 1 à 6, dans laquelle l'enceinte est un sachet (20) .

8. Batterie rechargeable selon l'une quelconque des revendications 1 à 7, dans laquelle l'enceinte comprend une première partie (201) et une deuxième partie (202) collées thermiquement l'une à l'autre.

9. Batterie rechargeable selon l'une quelconque des revendications 1 à 8, dans laquelle l'enceinte (20) comprend une feuille multicouche.

10. Batterie rechargeable selon l'une quelconque des revendications 1 à 9, dans laquelle la languette de connexion d'électrode (14) traverse de manière étanche l'enceinte (20) .

11. Batterie rechargeable selon l'une quelconque des revendications 1 à 10, dans laquelle l'élément de protection contre la température (30) est une résistance à coefficient de température positif.

12. Processus pour assembler une batterie rechargeable selon la revendication 1, comprenant les étapes suivantes :
- fixer la languette de connexion (16) à l'élément de protection contre la température (30) ;
dans lequel l'élément de protection contre la température (30) comprend : une première partie de connexion (31) connectée à la languette de connexion d'électrode positive (14), une partie de transmission (33) connectée à la première partie de connexion (31), et une deuxième partie de connexion (32) connectée à la partie de transmission (33) ;
- monter l'élément de protection contre la température (30) sur la partie externe de la languette de connexion d'électrode (14) ;
- plier la partie externe de la languette de connexion d'électrode (14) ;
- une fois que la partie externe a été pliée, fixer l'élément de protection contre la température (30) à la surface externe de l'enceinte (20), dans lequel la partie externe de la languette de connexion d'électrode (14) et l'élément de protection contre la température (30) sont connectés par l'intermédiaire d'une partie d'extension (34) s'enroulant autour d'une extrémité de la languette de connexion d'électrode (14) et couplée à la première partie de connexion (31).

13. Processus d'assemblage selon la revendication 12, dans lequel une bande adhésive double face (41) est déposée sur l'élément de protection contre la température avant le pliage de la partie externe, et dans lequel l'élément de protection contre la température (30) est fixé à la surface externe de l'enceinte (20) par la bande adhésive double face (41) .

14. Processus d'assemblage selon la revendication 12 ou 13, dans lequel l'élément de protection contre la température (30) comprend une première partie de connexion (31) attachée à une partie d'extension (34) enroulée autour de la partie externe de la languette de connexion d'électrode (14) et une deuxième partie de connexion (32) attachée à la languette de connexion (16).
